# EUROPÄISCHE PATENTSCHRIFT

(11) **EP 0 384 923 B1**
(45) Veröffentlichungstag und Bekanntmachung des Hinweises auf die Patenterteilung: **26.05.1993**
(21) Anmeldenummer: 89103457.1
(22) Anmeldetag: 28.02.1989
(51) Int. Cl.: F16B 39/24

(54) **Klemmscheibe für Schraubenbefestigung od. dgl.**
Camping disc for the locking of screws or the like
Rondelle de serrage pour la fixation de boulons ou autres choses semblables

(43) Veröffentlichungstag der Anmeldung: 05.09.1990
(73) Patentinhaber: Erico Elektrotechnische Spezialfabrik GmbH, D-66851 Schwanenmühle (DE)
(72) Erfinder: Mader, Jürgen, D-6750 Kaiserslautern-Mölschbach (DE)
(74) Vertreter: Türk, Gille, Hrabal, Leifert

(56) Entgegenhaltungen:
- DE-U- 7 017 824
- FR-E- 60 127

## Beschreibung

Die Erfindung betrifft eine Klemmscheibe für Schraubenbefestigungen od.dgl., die an einem Schraubenbolzen angebracht werden kann.

Als Korrosionsschutz erhalten beispielsweise aus Stahl bestehende Träger oder Profile für Hallen, Brücken und ähnliche Konstruktionen eine Beschichtung bzw. einen Überzug aus metallischen und/oder nichtmetallischen Materialien. Werden an derartige Bauteile nachträglich Installationen mittels Klemmen oder Abhängungen angebracht, beispielsweise indem man diese Installationen anschweißt oder unter Verwendung von in den Trägern oder Profilen vorgesehenen Bohrungen anschraubt, so wird dadurch die Korrosionsschutzbeschichtung im Montagebereich beschädigt oder gar zerstört, so daß der Korrosionsschutz insgesamt ungenügend ist und dementsprechend die Lebensdauer des Trägers oder Profils so kalkuliert werden muß, als ob der Träger oder das Profil keine Korrosionsschutzbeschichtung aufweist.

Auch wenn man im Träger oder Profil vor dem Anbringen der Korrosionsschutzbeschichtung Bohrungen vorsieht, um die Halter für anzuhängende oder sonstwie anzubringende Installationen mittels Schraubverbindungen befestigen zu können, ergibt sich das Problem der Beschädigung der Korrosionsbeschichtung im Bereich der Schraubverbindung, denn sowohl der Kopf der verwendeten Bolzenschrauben als auch die aufgeschraubte Schraubenmutter oder eine Unterlegscheibe kann sich gegenüber dem Träger oder Profil beim Festziehen oder Lösen bewegen, wodurch die Korrosionsschutzbeschichtung beschädigt werden kann. Wenn man Unterlegscheiben wie Federscheiben (vgl. FR-E 60 127) verwendet, ist diese Gefahr nicht befriedigend zu beheben, weil der Durchmesser von handelsüblichen Unterlegscheiben und/oder Federscheiben verhältnismäßig gering ist und daher Relativbewegungen zwischen diese Scheiben und der Unterlage, nämlich der Oberfläche des Trägers oder Profils, nicht ausgeschlossen werden können.

Der Erfindung liegt die Aufgabe zugrunde, diese Nachteile zu vermeiden und die Möglichkeit zu schaffen, die beim Anbringen von Anklemmungen, Abhängungen od. dgl. an korrosionsbeschichteten Stahlträgern und Profilen erforderlichen Klemmkräfte großflächig auf die Träger oder Profile zu übertragen und dabei Relativbewegungen zwischen den auf der Korrosionsbeschichtung aufliegenden Teilen und somit eine Beschädigung oder Zerstörung der Korrosionsschutzbeschichtungen mit Sicherheit zu vermeiden.

Diese Aufgabe wird erfindungsgemäß mit einer Klemmscheibe der eingangs genannten Art gelöst, welche die Merkmale des Kennzeichens des Patentanspruches 1 aufweist. Vorteilhafte Ausgestaltungen der Erfindung sind Gegenstand der Unteransprüche.

Durch die Erfindung wird eine Korrosionsbeschichtungen wie Lackschichten schützende Klemmscheibe geschaffen, die auf das Ende handelsüblicher Klemmschrauben aufgesteckt werden kann. Beispielsweise ist die erfindungsgemäße Klemmscheibe derart ausgelegt, daß sie auf übliche Schraubenbolzen der Abmessungen M6 und/oder M8 paßt. Die Klemmscheibe kann so ausgelegt sein, daß sie nur für eine Schraubenbolzengröße geeignet ist, jedoch ist sie vorteilhafterweise so gestaltet, daß sie auf Klemmschraubenbolzen nahe aneinanderliegender Größen bzw. Durchmesser in gleicher Weise paßt, beispielsweise auf Klemmschraubenbolzen der Größen M6 und M8.

Die am Grundkörper der Klemmscheibe angebrachten und über diesen vorstehenden federnden Zungen sind so ausgelegt und angeordnet, daß sie auf den Bolzen der Bolzenschraube der Schraubbefestigung bzw. Klemmverbindung passen und gegebenenfalls mit ihren äußeren Enden in die Gewindegänge des Schraubenbolzens eingreifen können. Die Passung ist dabei zweckmäßig so gewählt, daß einerseits eine ausreichende Montagesicherheit gewährleistet ist und andererseits sowohl das Gewinde des Gewindebolzens oder Schraubenbolzen als auch der Bolzen selbst frei gedreht werden kann, um zu verhindern, daß die Klemmscheibe beim Anziehen und/oder beim Lösen des Schraubenbolzens gegenüber der Unterlage, nämlich dem Träger oder Profil, verdreht wird.

Beim Anziehen des Schraubenbolzens, d.h. also beim Klemmvorgang, drückt die als Schutz der Korrosionsbeschichtung vorgesehenen erfindungsgemäßen Klemmscheibe auf die auf der Oberfläche des Stahlträgers oder -profils befindliche Beschichtung, ohne diese zu zerstören und auch ohne sich relativ zu dieser zu drehen oder zu bewegen. Relativbewegungen finden nur zwischen der Klemmscheibe selbst und dem Schraubenbolzen statt, so daß die Beschichtung, auf der die Klemmscheibe aufliegt, nur druckbelastet wird, reibende und drehende Bewegungen hingegen allein zwischen der Klemmscheibe und dem Schraubenbolzen stattfinden.

Die erfindungsgemäße Klemmscheibe ist vorzugsweise einstückig ausgebildet. Besonders vorteilhaft und wirtschaftlich ist es, die erfindungsgemäße Klemmscheibe aus federndem Stahl einstückig auszustanzen und zu formen, jedoch ist es auch möglich, diese Klemmscheibe aus ausreichende Federeigenschaften und Festigkeit aufweisendem Kunststoff herzustellen.

In der Zeichnung ist ein Ausführungsbeispiel einer erfindungsgemäßen Klemmscheibe dargestellt, und zwar zeigt
Fig. 1 eine Draufsicht und
Fig. 2 einen Querschnitt der Klemmscheibe nach Linie II-II aus Fig. 1.

Die in der Zeichnung gezeigte Klemmscheibe (1) ist ein Stanzstück, welches aus federndem Stahl wie VA-Stahl oder Stahl der Qualität St 12-03 Nr.1.0330 besteht.

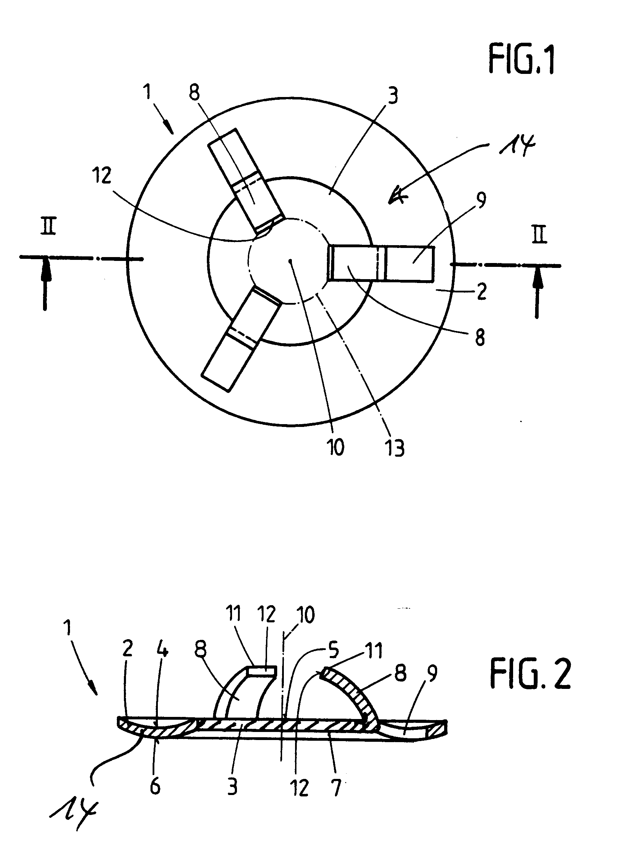

Die Klemmscheibe (1) hat einen scheibenförmigen Grundkörper (2) mit einem zentralen ebenen Abschnitt (3) und einem im Querschnitt muldenförmig oder rinnenartig ausgebildeten Rand (14), wie Figur 2 zeigt. Die tiefste Stelle (4) des im Querschnitt rinnenartigen Randes (14) liegt tiefer als die Oberseite (5) und der untere oder äußere Scheitelpunkt (6) des Randes (14) und höher als die Unterseite (7) des zentralen Abschnitts (3), wie Figur 2 erkennen läßt. Somit ist der Grundkörper (2) aufgrund seiner Kontur bzw. Form und der Eigenschaften des Materiales, aus dem er hergetellt ist, federnd.

Am Grundkörper (2) sind insgesamt drei hochstehende federnde Zungen (8) angeordnet, die um jeweils 120 gegeneinander versetzt sind.

Die federnden Zungen (8) sind aus dem Grundkörper (2) ausgestanzt und hochgebogen, so daß sich im Grundkörper (2) entsprechende rechteckige Ausschnitte (9) befinden. Diese Ausschnitte (9) begünstigen das ferdernd nachgiebige Verhalten des Grundkörpers (2), wenn dieser bei einem Klemmvorgang in Richtung seiner zentralen Achse (10) unter Druck gesetzt wird.

Die federnden Zungen (8) weisen mit ihrem hochgebogenen äußeren Ende (11) jeweils in Richtung zur mittleren Achse (10) der Klemmscheibe (1), wobei die Stirnfläche (12) jeder Zunge (8) in einem Winkel zur Achse (10) verläuft. Dementsprechend können die federnden Zungen (8) mit ihren äußeren Enden (11) formschlüssig in das Gewinde eines in Figur 1 lediglich angedeuteten Bolzenschraube (13) eingreifen, ebenso wie diese Enden auf einem gewindelosen Schaft oder Schaftende aufliegen können.

Im praktischen Gebrauch wird die Klemmscheibe (1) auf das äußere Ende eines Schraubenbolzens od. dgl. aufgesteckt, der beispielsweise in den einen Schenkel eines U-förmigen Bügels einer Klemme eingeschraubt ist und gegen einen beschichteten Träger od. dgl. angezogen werden soll, um den Bügel am Träger anzuklemmen. Die Klemmscheibe (1) bildet bei dieser Klemmvorrichtung das Kontaktstück, welches von der Bolzenschraube (13) auf den beschichteten Träger gedrückt wird. Das freie Stirnende der Bolzenschraube (13) kommt beim Festziehen der Klemmverbindung mit dem flachen zentralen Abschnitt (3) der Klemmscheibe (1) in Kontakt. Da der Scheitelpunkt (6) des ringförmigen Randes (14) tiefer als die Unterseite (7) des zentralen Abschnittes (3) liegt, drückt die Bolzenschraube (13) nicht unmittelbar auf die Unterlage, an der sie festgeklemmt werden soll. Vielmehr wird der Klemmdruck über die Klemmscheibe (1) verteilt auf die Unterlage übertragen, so daß Beschädigungen einer Schutzbeschichtung der Unterlage durch die Klemmschraube nicht zu befürchten sind.

Da die federnden Zungen (8) mit ihren Enden (11) auf dem Bolzenabschnitt der Bolzenschraube aufliegen bzw. in das Gewinde der Bolzenschraube (13) federnd eingreifen, ist einerseits gewährleistet, daß die Klemmscheibe (1) von der Bolzenschraube (13) nicht abfällt, während andererseits die Bolzenschraube (13) gegenüber der Klemmscheibe (1) verdreht werden kann, und zwar auch dann, wenn das Stirnende der Bolzenschraube auf der Oberseite (5) des zentralen Abschnittes (3) der Klemmscheibe (1) aufliegt. Dementsprechend ist sichergestellt, daß die Klemmscheibe (1) sich gegenüber der Unterlage, auf der sie aufliegt, nicht verdreht.

## Patentansprüche

1. Klemmscheibe für Schraubenbefestigungen od. dgl., die an einem Schraubenbolzen anzubringen ist, mit einem scheibenartigen Grundkörper,
**dadurch gekennzeichnet,**
daß der Grundkörper (2) einen zentralen geschlossenen Abschnitt (3) und als Halteelemente dienende federnde Zungen (8) mit freien, eine Mehrpunktaufnahme für die Spitze des Schraubenbolzens (13) bildende und relative Drehbewegungen zwischen dem Schraubenbolzen (13) und der Klemmscheibe (1) ermöglichende, über der Ebene (5) des Grundkörpers (2) und dem zentralen geschlossenen Abschnitt (3) desselben in Richtung zur Mittelachse (10) des Grundkörpers (2) weisenden Enden (11) aufweist.

2. Klemmscheibe nach Anspruch 1, dadurch gekennzeichnet, daß die federnden Zungen (8) aus dem Grundkörper (2) ausgeschnittene und herausgebogene Abschnitte des Grundkörpers (2) sind.

3. Klemmscheibe nach Anspruch 1 oder 2, dadurch gekennzeichnet, daß der Grundkörper (2) eine im Querschnitt profilierte Kontur aufweist.

4. Klemmscheibe nach einem der Ansprüche 1 bis 3, dadurch gekennzeichnet, daß der Grundkörper (2) und die einstückig an ihm vorgesehenen Zungen (8) aus federndem Material bestehen.

5. Klemmscheibe nach Anspruch 4, dadurch gekennzeichnet, daß Grundkörper (2) und federnde Zungen (8) aus Stahl bestehen.

## Claims

1. Clamping disc for screw fastenings and suchlike to be attached to screw bolts and having a disc-shaped body, characterised in that said body (2) has a closed middle section (3) and flexible tongues (8) acting as holding elements with free ends (11), which form a multi-point area to accommodate the tip of the screw bolt (13), allow relative rotational movements between said screw bolt (13) and said clamping disc (1) and point over the plane (5) of said body (2) and the closed middle section (3) of same towards the central axis (10) of said body (2).

2. Clamping disc according to Claim 1, characterised in that said flexible tongues (8) are sections of said body (2) which are cut out and curved to project from said body (2).

3. Clamping disc according to Claim 1 or 2, characterised in that said body (2) has a contoured cross-section.

4. Clamping disc according to one of Claims 1 to 3, characterised in that said body (2) and said tongues (8), which are arranged as an integral part of it, are composed of flexible material.

5. Clamping disc according to Claim 4, characterised in that said body (2) and flexible tongues (8) are made of steel.

## Revendications

1. Rondelle de serrage pour fixations par vis ou similaires, destinée à être montée sur un boulon fileté, comprenant un corps de base en forme de rondelle,
caractérisée en ce que le corps de base (2) comporte une section centrale fermée (3) et des languettes élastiques (8) faisant office d'éléments de maintien et présentant des extrémités libres (11) constituant un support multipoint pour le bout du boulon fileté (13) et autorisant des mouvements de rotation relative entre le boulon fileté (13) et la rondelle de serrage (1), situées au-dessus du plan (5) du corps de base (2) et de la section centrale fermée (3) de celui-ci, dirigées en direction de l'axe central (10) du corps de base (2).

2. Rondelle de serrage selon la revendication 1, caractérisée en ce que les languettes élastiques (8) sont des secteurs du corps de base (2) découpés et repliés hors du corps de base (2).

3. Rondelle de serrage selon l'une des revendications 1 ou 2, caractérisée en ce que le corps de base (2) présente une section transversale aux contours profilés.

4. Rondelle de serrage selon l'une des revendications 1 à 3, caractérisée en ce que le corps de base (2) et les languettes (8) prévues de façon intégrante sur ce corps sont réalisés en une matière élastique.

5. Rondelle de serrage selon la revendication 4, caractérisée en ce que le corps de base (2) et les languettes élastiques sont réalisés en acier.
